# EUROPEAN PATENT APPLICATION

(11) **EP 0 748 142 A2**
(43) Date of publication of application: **11.12.1996**
(21) Application number: 96304279.1
(22) Date of filing: 07.06.1996
(51) Int. Cl.: H04Q 11/04

(54) **Broadband resources interface management**

(30) Priority: 10.06.1995 GB 9511827
(71) Applicant: GPT LIMITED, Coventry, CV3 1HJ (GB)
(72) Inventor: Stagg, Larry Joseph, Warwickshire CV13 OBU (GB); Maffett, Ian Gerard, London W13 8LY (GB); Wainwright, Kevin John, Borehamwood, Herts. WD6 1HD (GB); Polkinghorne, Peter John Martin, North Harrow, Middlesex HA2 7PF (GB)
(74) Representative: Branfield, Henry Anthony

(57) **Abstract**

An interface between a customer premises network and one or more wide area Asynchronous Transfer Mode (ATM) networks is managed by a broadband resource interface management system controlling the interface connections through a service access unit at the interface, the unit providing basic ATM connection control and transport functions, which incorporates call management and a resource management system, routing being selected in accordance with various criteria.

## Description

The problem to be addressed by broadband resource interface management (BRIM) is the control and management of the interface between the customer premises network and one or more wide area networks (private, public and Virtual Path Networks (VPNs)). A customer premises broadband resource interface management system (BRIM) designed to optimise the connection of different types of Customer Premises Equipment (CPE) to ATM networks is described. The functionality and benefits to be made of resource management in an Asynchronous Transfer Mode (ATM) environment with particular emphasis on ATM VPNs are considered.

The principles of broadband resource management are initially identified and this is followed by details of how ATM connections and resources are modelled and then controlled by the resource management applications. The BRIM implementation in terms of the platform and applications is discussed and in conclusion a description of a system configuration is provided.

According to the present invention there is provided a telecommunications system comprising a customer premises network and at least one wide area Asynchronous Transfer Mode (ATM) network and a broadband resource interface management (BRIM) system to manage the interface between the networks, the BRIM controlling the interface connections through a service access unit at the interface, which unit provides basic ATM connection control and transport functions, wherein a physical connection is provided by selection of the or an appropriate ATM network and routing the connection therethrough and wherein bandwidth resources are identified within the ATM network configuration and the route characteristics are defined by Virtual Circuits (VCs), Virtual Paths (VPs), traffic profiles and ATM connection types, the routing and connection functions being carried out by matching the requirements of calls with available resources.

The present invention will now be described by way of example, with reference to the accompanying drawings, in which:-
Figure 1 is a schematic diagram illustrating the use of BRIM in a corporate network;
Figure 2 is a block diagram showing a resource manager architecture;
Figure 3 shows a schematic view of BRIM call routing;
Figure 4 illustrates the layered software architecture of a BRIM platform;
Figure 5 is a block diagram of a BRIM sub-systems implementation;

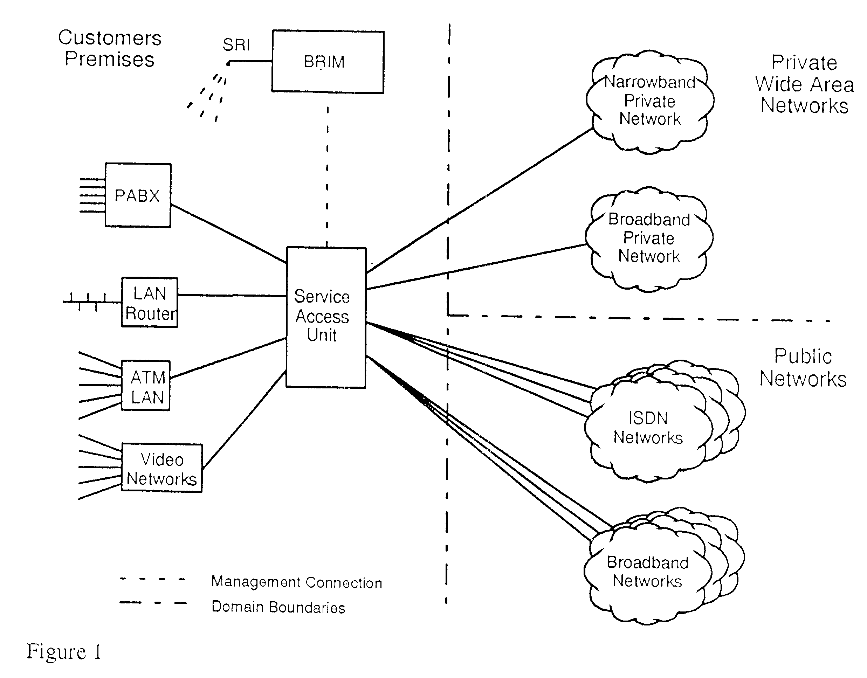

Figure 1 shows a generalised structure for a corporate site network. BRIM controls the connections through a service access unit that provides the basic ATM connection control and transport functions. Optionally the BRIM also interfaces to terminal equipment via a Service Request Interface (SRI). It is responsible for controlling the call connections from the equipment under its management umbrella.

BRIM can control the resources available to managed or unmanaged terminal equipments. For example in the managed case, terminals such as a workstation or Personal Computer (PC) with an ATM interface, can request a particular service via the SRI. BRIM is responsible for setting up or, at least, initiating the connection according to either, in the simplest case, pre-configured, requirements or, in more complex situations, negotiated requirements at the time of the service request.

For both managed and unmanaged terminal equipments, BRIM can control the physical connection by selection of the appropriate network and route. For selected or pre-determined routes, bandwidth resources are managed according to, for example, bandwidth requested and bandwidth available. In an ATM network, the bandwidth resources are identified within the ATM network configuration, with route characteristics defined by Virtual Circuits (VCs), Virtual Paths (VPs), traffic profiles and ATM connection types (e.g. CBR - constant bit rate, VBR - variable bit rate, ABR - available bit rate).

Criteria for selecting optimum routes and the ATM network configuration are established from a range of network and operational requirements. There are some decisions that are simple - e.g. delay on a particular route is greater than the requirements - but others are less clear - choice between a route with adequate mean bandwidth but not peak bandwidth and a route with adequate peak and mean bandwidth but high tariff. BRIM can also make choices between using say VBR or ABR for a particular connection. Route selection in complex situations requires a process that computes optimum routes based on the selection criteria. These are policies which are configured into BRIM to enable decisions to be made based on cost and quality of service parameters.

The core function for BRIM is the provision of a resource management application which carries out the above routing and connection functions by matching the requirements of the calls in the ATM network with the available resources. This is described in more detail below.

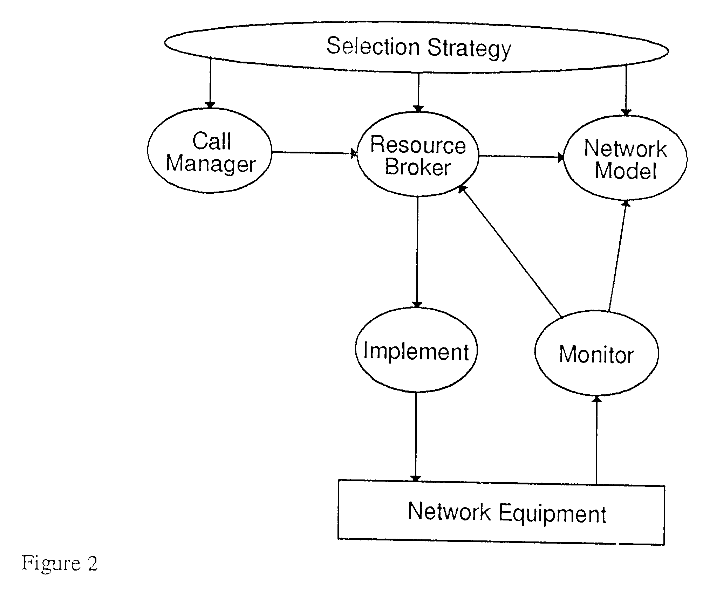

The key functions in the Resource Manager are the call manager, resource broker, network model and the selection strategy. Figure 2 shows these functions plus a function to implement the decisions of the resource broker. The resource broker passes on the request from the call manager for a connection to the network model which evaluates possibilities and replies with a list of choices for implementing the connection. The resource broker selects the "optimum" connection by referring to the selection strategy and executes the decision via the implementation function creating a route and opening up bandwidth. The main functions are described in more detail in the following sections.

The call manager is responsible for controlling the calls that are managed by the Resource Manager. It should be noted that the Resource Manager does not necessarily know the details of all calls in the network. For example a VP could be established to contain Local Area Network (LAN) emulation traffic - the Resource Manager would know the resources required for the VP but may not know the details of all the individual Switched Virtual Circuits (SVCs) set up in the VP.

Information on managed calls can come from the user interface, i.e. the human manager can request a call to be set up, or can come in through the Service Request Interface. This is an interface to terminal equipment so that terminals can request set-up, change of parameters or clear down of calls in the network.

A call could be a multimedia call where more than one connection is required, i.e. a connection for video and a connection with different parameters for data. In this situation the call manager will request from the resource broker two different connections which may well use different routes or networks to get to the destination.

The call could be a multiparty call. This would be managed by another function, a conference manager, which in turn would request calls from the call manager.

The call may be a booked call. This means that the call is booked for establishment some time in the future. The call manager will check whether it is possible to set up the connection when the booking is made and then is responsible for triggering the connection at the designated time.

The resource broker takes the requirements from the call manager and matches these with the resources offered by the network model. The resource broker reassesses the requirements whenever a new managed call is requested, changed or ended, or when there is some other perceived need, by monitoring the network equipment, to change the resources allocated to a VP or connection.

The resource broker requests a 'what-if' connection from each appropriate virtual network in the network model. Virtual networks are logically different networks perhaps on the same physical network, for example CBR, VBR and ABR networks. Some virtual networks can be ignored if their characteristics do not match the requirements of the call. The replies from each virtual network are compared using the selection strategy and a choice presented back to the call manager. If the call manager decides to go ahead and set up the call, an actual request is made of the network model which will update its information and the decision is implemented in the real network by the implementation function.

The network model is a software representation of the actual network being managed. It contains the topology of the physical network plus some abstractions to represent the usage of the network. The physical network is represented by terminals, nodes, networks and pipes to join these components together. The network may consist of different physical networks supplied by different network operators. The abstractions depend on the types of network being managed. In an ATM network, there will be Virtual Channels (VC), Virtual Paths (VP) and virtual networks. A virtual network is a network providing a given type of service, e.g. it is a network of VPs which may all be used for CBR traffic. The virtual network is a useful abstraction to reduce the problem space.

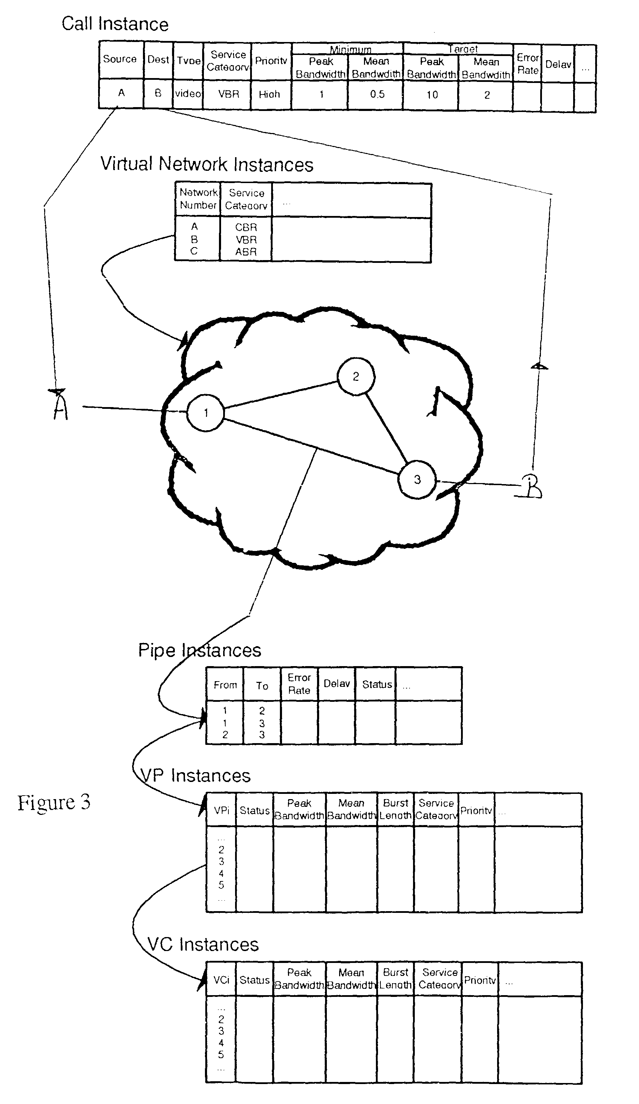

A function of the network model is to provide information to the resource broker to help it find the 'optimum' route. To do this the network model must calculate routes through the network and evaluate their usefulness for a particular call. A route is a particular VCC (Virtual Channel Connection) which will be made up of a VC within a VP, per pipe, along its path within a virtual network. Using calls and connectivity modelled as shown diagrammatically in Figure 3, the network model will evaluate routes within a virtual network. For each suitable virtual network, each possible component of the route (e.g. pipe, VP, VC) has associated parameters which must be checked against the requirements of the connection. This checking will be evaluated using the selection strategy and it should be noted that this strategy can be kept outside the network model. From checking all the possibilities, a list of routes can be constructed for evaluation by the resource broker.

The selection strategy contains the criteria with which decisions are made. It is used by the network model, the resource broker and the call manager to decide upon the optimum connection for a call. The values in the strategy are accessible to the operator of the resource manager so that the system can be customised for particular applications.

The criteria utilise all the parameters associated with a call plus some general criteria such as tariffs.

Calls for different types of network have different parameters. For instance in a narrowband network the criteria may merely be source and destination address plus tariff. Therefore the selection strategy could be:- use the network which is able to connect the source and destination and which has the cheapest tariff. However even narrowband networks may have more complex parameters such as delay, e.g. the difference between the delays resulting from a satellite link or a terrestrial link may be the deciding factor between the use of either of two different networks.

In ATM networks, the parameter for an ATM call are more complex. These include whether the connection requires a CBR service or a VBR service, peak and mean bandwidth, burst size, maximum acceptable delay, maximum acceptable error rate, priority etc. To match against such criteria is more difficult than the narrowband case. Some criteria can be absolute for a particular connection, i.e. the error rate must be less than a certain value or otherwise the application will not run so the connection would be useless. Where a range of possible connections is available, none of which exactly match the requirements, the selection strategy may decide on which parameters to compromise on, as generally some latitude can be accepted.

BRIM functionality can be incorporated as an extension to a network management system. An exemplary implementation uses a network management platform designed with OOA (object orientated analysis) techniques to run on a high performance UNIX workstation.

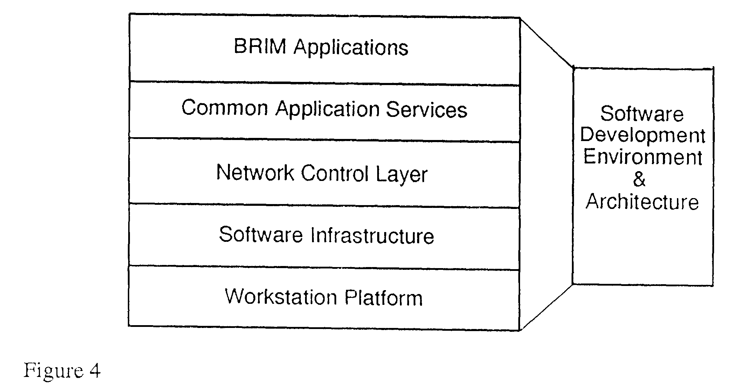

The software architecture uses a layered structure as shown in Figure 4. BRIM applications are supported by common applications services, particularly monitoring, event handling and event logging. The network control layer provides the internal representation of the network topology and the presentation of this to the BRIM operator in the form of a map with network status information. All layers are supported by a network management platform which itself incorporates the industry workstation standards of UNIX, X-Windows, Motif and Ethernet communication services. In addition an object management system provides support for functions such as for data handling, inter-object and inter-process communications.

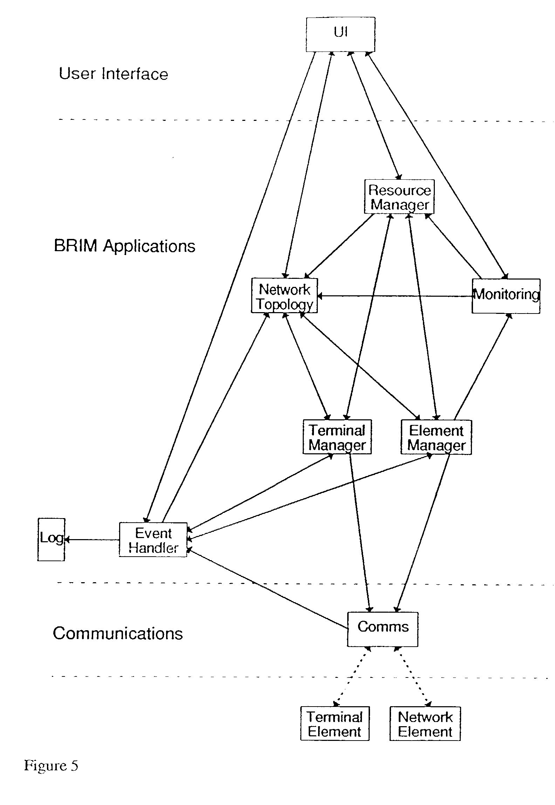

Figure 5 shows the OOA domains, sub-systems and their interconnection for the implemented system. The Resource Manager sub-system provides the core functionality for BRIM as covered in Sections 2 and 3.

The Network Topology sub-system manages and maintains the internal representation of the network, making available to other sub-systems the connectivity, routes and bandwidth limits of the network. This sub-system defines the network in terms of network elements and interconnections. Elements in the network which can be represented in the Network Topology sub-system are: managed nodes (SM), unmanaged nodes, external (e.g. public) networks, terminals (e.g. ATM-PCs) and connectivity (pipes, VPLs, VCCs).

The monitoring sub-system gathers information and statistics on selected network access links, connections, calls or network elements. As an extension to purely gathering data from the network, it is possible to add intelligent routines to the Monitoring sub-system which analyse and compile the statistics in an appropriate format to enable actions to be taken by other sub-systems or domains.

Connections are set up via the Terminal and Element managers which send commands via the Communications sub-system to the real hardware.

Events are monitored by the Event Handler sub-system which also determines to which sub-system (e.g. Log, User, Interface, Terminal or Element Manager) they should be forwarded.

Generally a single BRIM must control both ends of a connection and, where this is required control of the remote access service units should be bridged across the network.

Basic system functionality may be implemented in part as follows:-
1. The capability to route calls and control the bandwidth according to pre-determined preferred selection criteria.
2. The capability to change the policy (e.g. call priority, delays) for call routing and bandwidth resources and then change the network appropriately either statically or dynamically.
3. The capability to accommodate link failure within the overall routing policy.
4. Selection of ATM connection type.
   Adding ATM connection types and traffic categories to the network model in the resource management application, allows a higher level of decision to be made with respect to the connection type to be allocated according to the user needs as defined by the source traffic type and quality of service requirements.
5. Accommodation of managed or unmanaged terminals.
   All BRIM functions can be made available for either managed or unmanaged terminals.
   In the case of managed terminals, the traffic is controlled at source, whereas for unmanaged terminals the network traffic paths are partitioned and allocated according to overall average traffic levels present on the network.

An additional basic functionality of BRIM is the control of an ATM VPN (A-VPN). In this context the A-VPN is made up of VP links with VCCs connecting the sites. This method of operating an A-VPN requires no interaction with the network and all control is at the customer's premises. The aim is to provide a corporate A-VPN with ATM resourcing being optimised by BRIM.

A benefit of managing the A-VPN in this way is the possibility of reduced cell loss resulting in a better grade of service.

## Claims

1. A telecommunications system comprising a customer premises network and at least one wide area Asynchronous Transfer Mode (ATM) network and a broadband resource interface management (BRIM) system to manage the interface between the networks, the BRIM controlling the interface connections through a service access unit at the interface, which unit provides basic ATM connection control and transport functions, wherein a physical connection is provided by selection of the or an appropriate ATM network and routing the connection therethrough and wherein bandwidth resources are identified within the ATM network configuration and the route characteristics are defined by Virtual Circuits (VCs), Virtual Paths (VPs), traffic profiles and ATM connection types, the routing and connection functions being carried out by matching the requirements of calls with available resources.

2. A system as claimed in Claim 1, wherein the BRIM comprises a resource broker that controls the interface routing connections according to a selection strategy.

3. A system as claimed in Claim 1 or 2, wherein the BRIM comprises a network model and an initially predefined selection strategy.

4. A system as claimed in Claim 3, wherein the selection strategy is modified to match the requirements of calls with available resources.

5. A system as claimed in Claim 3 or 4, wherein the network model is a software representation of the network being managed.

6. A system as claimed in Claim 5 wherein the ATM network consists of a plurality of different physical networks.

7. A system as claimed in Claim 5 or 6 wherein the software representation includes the topology of the network plus abstractions to represent the usage of the network.

8. A system as claimed in Claim 7 wherein the abstractions relate to the types of network being managed.

9. A system as claimed in Claim 5 wherein the resource broker matches the requirements from the call manager with the resources offered by the network model.
